# EUROPEAN PATENT SPECIFICATION

(11) **EP 1 186 243 B1**
(45) Date of publication and mention of the grant of the patent: **07.03.2007**
(21) Application number: 99924016.1
(22) Date of filing: 14.06.1999
(51) Int. Cl.: A23L 1/176

(54) **PROCESS FOR PRODUCING FUNCTIONAL BREAD CRUMBS**
VERFAHREN ZUR HERSTELLUNG ZWECKMAESSIGER BROTKRUEMEL
PROCEDE DE PRODUCTION DE CHAPELURE FONCTIONNELLE

(43) Date of publication of application: 13.03.2002
(73) Proprietor: Nisshin Foods Inc., Tokyo 101-8441 (JP)
(72) Inventor: OKADA, Atsushi Nisshin Flour Milling Co., Ltd., Tokyo 103-8544 (JP); FUKUDOME, Shinichi Nisshin Flour Milling Co., Ltd., Iruma-gun Saitama 356-8511 (JP)
(74) Representative: HOFFMANN EITLE
(86) International application number: PCT/JP1999/003148
(87) International publication number: WO 2000/076331

(56) References cited:
- DE-A- 2 308 412
- JP-A- 8 228 705
- JP-A- 9 075 024
- JP-A- 50 121 455
- JP-A- 52 094 441
- JP-A- 55 150 870
- JP-A- 58 116 645
- PATENT ABSTRACTS OF JAPAN vol. 1997, no. 01, 31 January 1997 (1997-01-31) -& JP 08 228706 A (KAO CORP), 10 September 1996 (1996-09-10)

## Description

### Technical Field

The present invention relates to a process for producing functional bread crumbs, and more particularly to a process for producing functional bread crumbs which readily and reliably adhere to a food ingredient even when the crumbs are applied directly thereto, and when the food ingredient coated with the crumbs is deep-fried in oil, the resultant coating assumes an appropriate color, a crispy texture with tenderness (hereinafter tenderness in this context will be referred to as "*sakumi*"), and a favorable flavor, and when the food ingredient is meat, the juicy (i.e., tender and tasteful) texture of the meat is maintained.

### Background Art

Deep-fried foods (hereinafter called "deep-frieds") are produced through cooking at high temperature by use of a large amount of oil. During deep-frying, a food ingredient is heated to its core within a short period of time, and therefore loss of nutrients is relatively small. Deep-frieds are a type of foods favored by many people, since they assume a taste of oil or fat and an appetizing flavor. Among deep-frieds, cutlet is produced typically through the following process: flour is applied to raw meat, such as pork, beef, or chicken (this step is called "*uchiko*"); the resultant meat is dipped in beaten egg; dried bread crumbs are caused to adhere to the dipped meat; and the meat covered with the crumbs is deep fried in oil.

However, the aforementioned process including *uchiko,* dipping in beaten egg, and adhesion of dried bread crumbs is troublesome. Therefore, studies have been carried out on bread crumbs which can be caused to adhere sufficiently to a food ingredient without requiring *uchiko* and dipping in beaten egg. For example, the below-described techniques are already known.

A batter mixture for deep-frying containing bread crumbs and one or more species selected from among highly cold-water-swellable or cold-water-soluble natural paste, synthetic paste, gelatinized starch, dry egg white, and dry whole egg; preferably flour or starch; and if desired, seasonings, spices, etc. (Japanese Patent Application Laid-Open (*kokai*) No. 55-150870). A process for producing bread crumbs characterized in that a coating solution is sprayed onto bread crumbs while the bread crumbs are rotated and/or a fluidized bed of the bread crumbs is formed, and the resultant bread crumbs are dried to thereby allow a coating material to adhere to the bread crumbs (Japanese Patent Application Laid-Open (*kokai*) No. 8-228705).

However, in the technique disclosed in Japanese Patent Application Laid-Open (*kokai*) No. 55-150870, bread crumbs are merely mixed with powder of, for example, natural paste. Therefore, since the bread crumbs and the powder are separated from each other in the batter mixture, the mixture cannot be caused to adhere sufficiently to meat. In addition, when the size of the bread crumbs is reduced for preventing such separation, a crispy texture with *sakumi* of the bread crumbs cannot be obtained after deep-frying. Meanwhile, in the case of the technique disclosed in Japanese Patent Application Laid-Open (*kokai*) No. 8-228705, since drying steps must be carried out twice, the process for producing bread crumbs becomes troublesome. In addition, since bread crumbs are soaked in a coating solution, the matrix structure of the bread crumbs is deformed, resulting in a hard texture of the bread crumbs after deep frying. Use of a large amount of gelatinized starch or paste induces an increase in viscosity, and lumps of bread crumbs are formed easily. Therefore, the amount of gelatinized starch or paste used is limited.

JP 8 228 706 A discloses a processed bread flour comprising bread flour to whose surface a mixture of a protein with at least a highly viscous raw material selected from the group consisting of a monosaccharide, an oligosaccharide, dextrin, pullulan, a sugar alcohol and a protein hydrolysate is adhered.

JP 9 075 024 A describes the production of processed bread crumbs by spraying a solution of a high viscosity material, preferably sorbitol or oligosaccharide alcohol, and a protein, preferably egg protein, on the surface of bread crumbs and drying the bread crumbs.

DE 2 308 412 A discloses a process for preparing functional bread crumbs comprising the steps of mixing ground white bread with bonding agents and flavorings such as fresh eggs, egg powder and spices. The resulting mixture can be directly used as a paste or subjected to a drying step before using.

In view of the foregoing, an object of the present invention is to provide a process for producing functional bread crumbs which can be produced easily and which can be caused to adhere sufficiently to a food ingredient even when the crumbs are applied directly to the food ingredient, and after the food ingredient coated with the bread crumbs is deep-fried in oil, the resultant coating assumes excellent texture and color, and, when the food ingredient is meat, juicy texture of the meat can be maintained.

### Disclosure of the Invention

The present inventors have performed extensive studies in order to attain the aforementioned object, and have found that when fresh bread crumbs are mixed with powdery starch and/or powdery protein, and the resultant mixture is dried to thereby cause the powdery starch and/or powdery protein to adhere to the bread crumbs, there can be produced functional bread crumbs which can be caused to adhere sufficiently to a food ingredient, without *uchiko* and dipping in beaten egg, even when the crumbs are applied directly to the food ingredient, and that after the food ingredient coated with the bread crumbs is deep-fried in oil, the resultant coating assumes excellent texture, color, and flavor, and, when the food ingredient is meat, juicy texture of the meat can be maintained. The present invention has been accomplished on the basis of this finding.

Accordingly, the present invention provides a process for producing functional bread crumbs comprising mixing fresh bread crumbs with powdery starch and/or powdery protein having a particle size of 20 to 500 µm and additionally powdery sugar; and drying the resultant mixture to thereby cause the powdery starch and/or powdery protein and powdery sugar to adhere to the bread crumbs.

### Best Mode for Carrying Out the Invention

In general, the term "bread crumbs" refers to dried bread crumbs. Dried bread crumbs are produced through, for example, the following process: flour, yeast, sugar, lard, etc. are mixed together, and the resultant mixture is fermented by means of, for example, a straight dough method, followed by baking at low temperature, cooling, pulverization, and drying. As used herein, the expression "fresh bread crumbs" refers to bread crumbs obtained before drying, which is the final step of the aforementioned process for producing dried bread crumbs. Such fresh bread crumbs contain water usually in an amount of 15-60 wt.%, preferably 25-50 wt.%. No particular limitation is imposed on the size of an individual fresh bread crumb, but the average crumb size is preferably 100 µm to 7 mm, more preferably 200 µm to 5 mm. As used herein, the term "average crumb (or particle) size" refers to central accumulative value as measured by use of Microtrac FSA.

Starch, protein, or sugar used in the present invention must assume a powdery form. The average particle size of the powder is 20-500 µm, preferably 40-100 µm. When the average particle size exceeds 500 µm, the powder adheres insufficiently to fresh bread crumbs, whereas when the average particle size is less than 20 µm, there arise problems, including generation of lumps of the powder during mixing with fresh bread crumbs, and dispersion of the powder during production of functional bread crumbs, which is not preferable.

Examples of the starch include potato starch, sweet potato starch, flour starch, cornstarch, waxy cornstarch, and gelatinized starch or modified starch thereof. These may be used singly or in combination of two or more species. Of these, water-soluble gelatinized starch is particularly preferred. Examples of the protein include egg proteins such as whole egg, egg yolk, egg white, and ovalbumin and ovoglobulin separated therefrom; milk proteins such as nonfat powdered milk, fat powdered milk, and whey protein; animal proteins such as gelatin and collagen; and vegetable proteins such as soybean protein and flour protein. These may be used singly or in combination of two or more species. Examples of the sugar include monosaccharides such as glucose and fructose; oligosaccharides such as sucrose, maltose, lactose, and stachyose; and polysaccharides such as syrup and starch sugar. These may be used singly or in combination of two or more species.

In the present invention, powdery starch and/or powdery protein must be caused to adhere uniformly to bread crumbs. In addition to powdery starch and powdery protein, powdery sugar is caused to adhere to the bread crumbs. No particular limitation is imposed on the method for causing such powder to adhere to bread crumbs. Since fresh bread crumbs contain moisture on their surfaces, powdery starch, etc. can be caused to adhere to the fresh bread crumbs merely by mixing with the bread crumbs and stirring the mixture appropriately. When two or more species of powdery starch, powdery protein, and powdery sugar are caused to adhere to fresh bread crumbs, these are preferably mixed together uniformly in advance (hereinafter, a mixture obtained through uniform mixing of powdery starch and/or powdery protein, and, if desired, powdery sugar will be referred to as a "functional mixture"). In addition to the aforementioned powdery starch, powdery protein, and powdery sugar, if desired, powdery seasoning, powdery thickener, powdery surfactant, liquid or solid oil or fat, salt, colorant, perfume, spice, sweetening agent, etc. may be caused to adhere to fresh bread crumbs, so long as such additives do not impede the effects of the present invention.

On the basis of 100 parts by weight of fresh bread crumbs, the adhesion amount of a functional mixture is preferably 2-60 parts by weight, more preferably 5-60 parts by weight, much more preferably 10-60 parts by weight, most preferably 20-40 parts by weight. When the adhesion amount of the functional mixture is less than 2 parts by weight, the resultant functional bread crumbs tends to adhere insufficiently to meat, etc. In contrast, when the adhesion amount of the functional mixture exceeds 60 parts by weight, lumps are easily generated during production of functional bread crumbs, and the resultant bread crumbs tend to provide a hard texture after deep-frying. When powdery sugar is used, the incorporation amount of the powdery sugar is preferably 0.01-80 parts by weight, more preferably 2-80 parts by weight, much more preferably 20-50 parts by weight, on the basis of the total incorporation amount of powdery starch and/or powdery protein (100 parts by weight). When the incorporation amount of the powdery sugar exceeds 80 parts by weight, depending on the type of the sugar, the resultant functional bread crumbs tend to become sticky.

Subsequently, fresh bread crumbs to which a functional mixture adheres are dried, to thereby produce the functional bread crumbs of the present invention. No particular limitation is imposed on the drying method, but hot-air drying is preferably carried out. Preferably, the fresh bread crumbs are dried uniformly while the bread crumbs are fluidized or rotated continuously. The water content of the functional bread crumbs is 2-20 wt.%, preferably 3-10 wt.%, in order to cause the bread crumbs to adhere sufficiently to meat, etc., and to obtain excellent texture, color, and flavor after deep-frying. In the thus-produced functional bread crumbs of the present invention, the amount of the functional mixture which adheres to 100 parts by weight of the bread crumbs is preferably 3-86 parts by weight, more preferably 7-86 parts by weight, much more preferably 14-86 parts by weight.

### Examples

The present invention will next be described in more detail by way of Examples, which should not be construed as limiting the invention thereto.

Reference Examples 1 through 5 and Comparative Examples 1 and 2 Functional bread crumbs were produced by use of functional mixtures in which the formulation of powdery starch and/or powdery protein was varied.

In Reference Example 1, powdery starch alone was used as a functional mixture, and in Reference Example 5, powdery protein alone was used as a functional mixture. In Reference Example 2, powdery starch (75 parts by weight) and powdery protein (25 parts by weight) were mixed together, and the resultant mixture was stirred uniformly, to thereby prepare a functional mixture. In each of Reference Examples 3 and 4, the procedure of Reference Example 2 was repeated, except that the amounts of powdery starch and powdery protein were changed as shown in Table 1, to thereby prepare a functional mixture. Subsequently, fresh bread crumbs (100 parts by weight) were mixed with each of the aforementioned functional mixtures (25 parts by weight), the resultant mixture was stirred uniformly, and the mixture was dried by use of a fluidized-bed drying apparatus until the water content of the mixture became 6 wt.%, to thereby produce functional bread crumbs. In Comparative Examples 1 and 2, the aforementioned fresh bread crumbs were dried until the water content of the bread crumbs became 6 wt.%, and the thus-dried bread crumbs were used.

**Table 1**

| | Ex. 1* | Ex. 2* | Ex. 3* | Ex. 4* | Ex. 5* | Comp. Ex. 1 | Comp. Ex. 2 |
|---|---|---|---|---|---|---|---|
| Dried bread crumbs (parts by weight) | - | - | - | - | - | Ex. 100 | Ex. 100 |
| Fresh bread crumbs (parts by weight)¹⁾ | 100 | 100 | 100 | 100 | 100 | - | - |
| Functional mixture (parts by weight) | 25 | 25 | 25 | 25 | 25 | - | - |

| (Functional mixture formulation) | | | | | | | |
|---|---|---|---|---|---|---|---|
| Powdery starch (parts by weight) ²⁾ | 100 | 75 | 50 | 25 | - | - | - |
| Powdery protein (parts by weight) ³⁾ | - | 25 | 50 | 75 | 100 | - | - |
| Adhesion amount (g) | 6.0 | 5.6 | 5.6 | 5.6 | 5.6 | 3.8 | 5.7 |
| Color of deep fried | 2.0 | 2.1 | 2.1 | 2.2 | 2.2 | 1.4 | 2.0 |
| Texture of coating | 4.3 | 4.2 | 4.2 | 4.2 | 4.0 | 3.2 | 4.2 |
| Texture of meat | 4.3 | 4.1 | 4.1 | 4.1 | 4.0 | 1.8 | 4.0 |

| | | | | | | | |
|---|---|---|---|---|---|---|---|
| 1) Fresh bread crumbs (product of Frystar) (water content: 40 wt.%) 2) Cornstarch a (gelatinized starch derived from corn) (product of Matsutani Chemical Industry Co., Ltd.) 3) Dried egg white F-type (egg white powder) (product of Albstar) * Reference Examples | | | | | | | |

Test Example 1 (evaluation of functional bread crumbs of Reference Examples 1 through 5 and Comparative Examples 1 and 2 when used in chicken cutlet)

The above-produced functional bread crumbs or dried bread crumbs were applied directly to chicken breast (four pieces, 20 g each), and the amount of the bread crumbs which adhered thereto was measured. Subsequently, the resultant chicken breast was deep-fried in oil at 170°C for three minutes. The color of the deep fried, the texture of the coating, and the texture of the meat were evaluated on the basis of the below-described standards Reference Examples 1 through 5 and Comparative Example 1). In Comparative Example 2, chicken breast (four pieces, 20 g each) was subjected to *uchiko,* and dipped in beaten egg in a manner similar to that of a conventional method, followed by application of dried bread crumbs. After the amount of the bread crumbs which adhered to the chicken breast was measured, the chicken breast was deep-fried in oil in a manner similar to that described above, and the color of the deep fried, etc. were evaluated. The results are shown in Table 1. Each evaluation rating is represented by the average of ratings evaluated by 10 panelists (the same shall apply hereinafter).

### Evaluation standards

Color of deep-fried
3: Suitable color, excellent
2: Adequate color, good
1: Slight color, poor

Texture of coating
5: Exceptional *sakumi* texture, excellent
4: Appropriate *sakumi* texture, good
3: Slightly poor *sakumi* texture, fair
2: Poor *sakumi* texture and slightly crunchy texture, poor
1: Very poor *sakumi* texture and crunchy texture, very poor

Texture of meat
5: Very rich juiciness and soft texture, excellent
4: Rich juiciness and soft texture, good
3: Slightly poor juiciness, fair
2: Poor juiciness and hard texture, poor
1: Very poor juiciness and very hard texture, very poor

As is apparent from Table 1, as compared with the case of the conventional method in which dried bread crumbs are applied to meat after the meat is subjected to *uchiko* and dipped in beaten egg, when the functional bread crumbs of the present invention are used, without a troublesome procedure including *uchiko* and dipping in beaten egg, the amount of the bread crumbs which adhere to meat is nearly equal to that of the dried bread crumbs which adhere to meat. In addition, the deep-fried obtained by use of the functional bread crumbs is similar to that obtained by use of the dried bread crumbs, in terms of color of deep-fried, texture of coating, and texture of meat.

### Examples 6 through 13

Functional bread crumbs were produced by use of functional mixtures in which the incorporation amounts of powdery starch and/or powdery protein and powdery sugar were varied.

In Example 6, powdery starch (100 parts by weight) and powdery sugar (30 parts by weight) were mixed together, and the resultant mixture was stirred uniformly, to thereby prepare a functional mixture. In Examples 7 through 13, the procedure of Example 6 was repeated, except that the incorporation amounts of powdery starch, powdery protein, and powdery sugar were changed as shown in Table 2, to thereby prepare functional mixtures. Subsequently, functional bread crumbs were produced in a manner similar to that of Reference Examples 1 through 5.

**Table 2**

| | Ex. 6 | Ex. 7 | Ex. 8 | Ex. 9 | Ex. 10 | Ex. 11 | Ex. 12 | Ex. 13 | Comp. Ex. 1 | Comp. Ex. 2 |
|---|---|---|---|---|---|---|---|---|---|---|
| Dried bread crumbs (parts by weight) | - | - | - | - | - | - | - | - | 100 | 100 |
| Fresh bread crumbs (parts by weight)¹⁾ | 100 | 100 | 100 | 100 | 100 | 100 | 100 | 100 | - | - |
| Functional mixture (parts by weight) | 25 | 25 | 25 | 25 | 25 | 25 | 25 | 25 | - | - |

| (Functional mixture formulation) | | | | | | | | | | |
|---|---|---|---|---|---|---|---|---|---|---|
| Powdery starch) (parts by weight)²⁾ | 100 | 50 | - | 50 | 50 | 50 | 50 | 50 | - | - |
| Powdery protein (parts by weight)³⁾ | - | 50 | 100 | 50 | 50 | 50 | 50 | 50 | - | - |
| Powdery sugar (parts by weight)⁴⁾ | 30 | 30 | 30 | 2 | 20 | 45 | 60 | 80 | - | - |
| Adhesion amount (g) | 6.7 | 6.5 | 6.4 | 5.8 | 6.2 | 7.3 | 7.2 | 7.3 | 3.8 | 5.7 |
| Color of deep-fried | 2.1 | 2.4 | 2.6 | 2.2 | 2.4 | 2.6 | 2.6 | 2.6 | 1.4 | 2.0 |
| Texture of coating | 4.4 | 4.4 | 4.6 | 4.3 | 4.5 | 4.5 | 4.6 | 4.6 | 3.2 | 4.2 |
| Texture of meat | 4.3 | 4.4 | 4.5 | 4.2 | 4.6 | 4.7 | 4.6 | 4.7 | 1.8 | 4.0 |

| | | | | | | | | | | |
|---|---|---|---|---|---|---|---|---|---|---|
| 1) Fresh bread crumbs (product of Frystar) (water content: 40 wt.%) 2) Cornstarch α (gelatinized starch derived from corn) (product of Matsutani Chemical Industry Co., Ltd.) 3) Dried egg white F-type (egg white powder) (product of Albstar) 4) Pineflow (dextrin) (product of Matsutani Chemical Industry Co., Ltd.) | | | | | | | | | | |

### Test Example 2 (evaluation of functional bread crumbs of Examples 6 through 13 when used in chicken cutlet)

The functional bread crumbs produced in Examples 6 through 13 were used, and the amount of the bread crumbs which adhere to meat was measured in a manner similar to that of Test Example 1, followed by evaluation. The results are shown in Table 2 (including the results of Comparative Examples 1 and 2).

As is apparent from Tables 1 and 2, as compared with the case of Comparative Example 2 in which dried bread crumbs are applied through the conventional method, when powdery sugar is used, without a troublesome procedure, the amount of the functional bread crumbs which adhere to meat increases, and the deep-fried is improved in color, etc. After deep-frying, exfoliation and falling of the coating were not observed. The results show that such effects are obtained considerably when the amount of powdery sugar is 20-80 parts by weight on the basis of the total amount (100 parts by weight) of powdery starch and powdery protein (Examples 10 through 13).

### Examples 14 through 20

Functional bread crumbs were produced by changing the incorporation amount of a functional mixture on the basis of the amount of fresh bread crumbs.

In Example 14, powdery starch (20 parts by weight), powdery protein (50 parts by weight), and powdery sugar (30 parts by weight) were mixed together, and the resultant mixture was stirred uniformly, to thereby prepare a functional mixture. Subsequently, the functional mixture (3 parts by weight) was mixed with fresh bread crumbs (100 parts by weight), the resultant mixture was stirred uniformly, and the mixture was dried by use of a fluidized-bed drying apparatus until the water content of the mixture became 6 wt.%, to thereby produce functional bread crumbs. In Examples 15 through 20, the procedure of Example 14 was repeated, except that the incorporation amounts of the functional mixture and fresh bread crumbs were changed as shown in Table 3, to thereby produce functional bread crumbs.

**Table 3**

| | Ex. 14 | Ex. 15 | Ex. 16 | Ex. 17 | Ex. 18 | Ex. 19 | Ex. 20 | Comp. Ex. 1 | Comp. Ex. 2 |
|---|---|---|---|---|---|---|---|---|---|
| Dried bread crumbs (parts by weight) | - | - | - | - | - | - | - | 100 | 100 |
| Fresh bread crumbs (parts by weight)¹⁾ | 100 | 100 | 100 | 100 | 100 | 100 | 100 | - | - |
| Functional mixture (parts by weight) | 3 | 10 | 20 | 30 | 40 | 50 | 60 | - | - |

| (Functional mixture formulation) | | | | | | | | | |
|---|---|---|---|---|---|---|---|---|---|
| Powdery starch (parts by weight)²⁾ | 20 | 20 | 20 | 20 | 20 | 20 | 20 | - | - |
| Powdery protein (parts by weight)³⁾ | 50 | 50 | 50 | 50 | 50 | 50 | 50 | - | - |
| Powdery sugar (parts by weight)⁴⁾ | 30 | 30 | 30 | 30 | 30 | 30 | 30 | - | - |
| Adhesion amount (g) | 5.0 | 7.9 | 9.3 | 8.9 | 8.3 | 7.6 | 7.3 | 3.8 | 5.7 |
| Color of deep-fried | 2.0 | 2.5 | 2.6 | 2.7 | 2.7 | 2.6 | 2.5 | 1.4 | 2.0 |
| Texture of coating | 4.0 | 4.5 | 4.6 | 4.5 | 4.3 | 4.1 | 3.8 | 3.2 | 4.2 |
| Texture of meat | 3.5 | 4.5 | 4.7 | 4.8 | 4.7 | 4.7 | 4.6 | 1.8 | 4.0 |

| | | | | | | | | | |
|---|---|---|---|---|---|---|---|---|---|
| 1) Fresh bread crumbs (product of Frystar) (water content: 40 wt.%) 2) Cornstarch α (gelatinized starch derived from corn) (product of Matsutani Chemical Industry Co., Ltd.) 3) Dried egg white F-type (egg white powder) (product of Albstar) 4) Pineflow (dextrin) (product of Matsutani Chemical Industry Co., Ltd.) | | | | | | | | | |

### Test Example 3 (evaluation of functional bread crumbs of Examples 14 through 20 when used in chicken cutlet)

The functional bread crumbs produced in Examples 14 through 20 were used, and the amount of the bread crumbs which adhere to meat was measured in a manner similar to that of Test Example 1, followed by evaluation. The results are shown in Table 3 (including the results of Comparative Examples 1 and 2).

In Examples 14 through 20, the amount of the functional bread crumbs which adhere to meat was large, and the color of the deep-fried, etc. were excellent. Particularly in Examples 15 through 19, without a troublesome procedure, there was obtained a deep-fried which was more excellent, in terms of adhesion amount of bread crumbs, color, etc. than that obtained in Comparative Example 2 in which dried bread crumbs are applied through the conventional method.

In Example 20, there was obtained a deep-fried which was more excellent than that of Comparative Example 2 in terms of adhesion amount of bread crumbs, the deep-fried being similar to that of Comparative Example 2 in terms of color, etc.

### Industrial Applicability

According to the process of the present invention, there can be easily produced functional bread crumbs which can be caused to adhere sufficiently to meat, etc., without *uchiko* and dipping in beaten egg. After the meat coated with the bread crumbs is deep-fried in oil, exfoliation and falling of the coating do not occur, the coating assumes excellent texture and color, and the juicy texture of the meat can be maintained.

## Claims

1. A process for producing functional bread crumbs comprising mixing fresh bread crumbs with powdery starch and/or powdery protein having a particle size of 20 to 500 µm and additionally powdery sugar; and drying the resultant mixture to thereby cause the powdery starch and/or powdery protein and powdery sugar to adhere to the bread crumbs.

2. The process for producing functional bread crumbs according to claim 1, wherein the powdery starch and/or powdery protein in a total amount of 2-60 parts by weight are caused to adhere to 100 parts by weight of the fresh bread crumbs.

3. The process for producing functional bread crumbs according to claim 1 or 2, wherein the powdery starch, powdery protein, and powdery sugar in a total amount of 2-60 parts by weight are caused to adhere to 100 parts by weight of the fresh bread crumbs.

4. The process for producing functional bread crumbs according to any of claims 1 to 3, wherein 0.01-80 parts by weight of the powdery sugar is mixed with 100 parts by weight of the powdery starch and powdery protein.

## Patentansprüche

1. Verfahren zur Herstellung von funktionellem Paniermehl, umfassend das Mischen von frischem Paniermehl mit pulverförmiger Stärke und/oder pulverförmigem Protein mit einer Partikelgröße von 20 bis 500 µm und pulverförmigem Zucker und das Trocknen der resultierenden Mischung, wodurch bewirkt wird, daß die pulverförmige Stärke und/oder das pulverförmige Protein und der pulverförmige Zucker an dem Paniermehl anhaften.

2. Verfahren zur Herstellung von funktionellem Paniermehl gemäß Anspruch 1, worin bewirkt wird, daß die pulverförmige Stärke und/oder das pulverförmige Protein in einer Gesamtmenge von 2 bis 60 Gew.Teilen an 100 Gew.Teilen des frischen Paniermehls anhaften.

3. Verfahren zur Herstellung von funktionellem Paniermehl gemäß Anspruch 1 oder 2, worin bewirkt wird, daß die pulverförmige Stärke, das pulverförmige Protein und der pulverförmige Zucker in einer Gesamtmenge von 2 bis 60 Gew.Teilen an 100 Gew.Teilen des frischen Paniermehls anhaften.

4. Verfahren zur Herstellung von funktionellem Paniermehl gemäß mindestens einem der Ansprüche 1 bis 3, worin 0,01 bis 80 Gew.Teile des pulverförmigen Zuckers mit 100 Gew.Teilen der pulverförmigen Stärke und des pulverförmigen Proteins gemischt werden.

## Revendications

1. Procédé pour la production de chapelure fonctionnelle comprenant les opérations consitant à mélanger de la chapelure fraîche avec de l'amidon en poudre et/ou de la protéine en poudre ayant une taille particulaire de 20 à 500 µm et en addition du sucre en poudre ; et à sécher le mélange résultant pour obtenir que l'amidon en poudre et/ou la protéine en poudre et le sucre en poudre adhèrent sur la chapelure.

2. Procédé pour la production de chapelure fonctionnelle selon la revendication 1, dans lequel il est fait en sorte que la poudre d'amidon et/ou la protéine en poudre dans une quantité totale de 2 - 60 parties en poids adhèrent à 100 parties en poids de la chapelure fraîche.

3. Procédé pour la production de chapelure fonctionnelle selon la revendication 1 ou 2, dans lequel on fait en sorte que l'amidon en poudre, la protéine en poudre, et le sucre en poudre dans une quantité totale de 2 - 60 parties en poids adhèrent sur 100 parties en poids de la chapelure fraîche.

4. Procédé pour la production de chapelure fonctionnelle selon l'une quelconque des revendications 1 à 3, dans lequel 0,01 - 80 parties en poids du sucre en poudre sont mélangées à 100 parties en poids de la poudre d'amidon et de la protéine en poudre.
